# EUROPÄISCHE PATENTSCHRIFT

(11) **EP 2 166 238 B1**
(45) Veröffentlichungstag und Bekanntmachung des Hinweises auf die Patenterteilung: **13.02.2013**
(21) Anmeldenummer: 09170729.9
(22) Anmeldetag: 18.09.2009
(51) Int. Cl.: F16B 41/00

(54) **Sicherungsanordnung zur verliersicheren Aufnahme eines Verbindungselementes an einem Bauteil**
Safety assembly for holder of a connection element on a component preventing loss
Agencement de sécurisation pour la réception protégée contre la perte d'un élément de raccordement sur un composant

(30) Priorität: 19.09.2008 DE 102008048095
(43) Veröffentlichungstag der Anmeldung: 24.03.2010
(73) Patentinhaber: Huf Hülsbeck & Fürst GmbH & Co. KG, 42551 Velbert (DE)
(72) Erfinder: Pieper, Friedrich, 84513 Töging (DE)
(74) Vertreter: Bals, Rüdiger

(56) Entgegenhaltungen:
- DE-U1- 29 505 255
- FR-A1- 2 880 929

## Beschreibung

Die vorliegende Erfindung richtet sich auf eine Sicherungsanordnung mit einem Sicherungsmittel zur verliersicheren Aufnahme eines um eine Rotationsachse ausgeführten bolzenförmigen Verbindungselementes an einem ersten Bauteil, wobei das Verbindungselement zur Verbindung des ersten Bauteils mit wenigstens einem zweiten Bauteil vorgesehen ist, und wobei das Verbindungselement einen Kopfabschnitt und einen Schaftabschnitt aufweist, so dass der Schaftabschnitt in eine sich um die Rotationsachse herum ausgebildete Bohrung im ersten Bauteil einfügbar ist und wobei der Kopfabschnitt zur Anlage an einer Auflagefläche des ersten Bauteils ausgebildet ist.

Eine gattungsbildende Sicherungsanordnung ist aus der DE 195 23 932 C2 bekannt. Die Sicherungsanordnung umfasst eine metallische, im Wesentlichen hülsenförmig ausgebildete Verliersicherung für Verbindungselemente, die recht winklig zur Auflagefläche angeordnet wird und aus einem setzungs- oder kriechgefährdeten Werkstoff, insbesondere aus einem Kunststoff, besteht. Das Verbindungselement dient zum Verbinden eines ersten Bauteils mit einem zweiten Bauteil. Zur veliersicheren Anordnung des Verbindungselementes am ersten Bauteil wird die Verllersicherung in die um die Rotationsachse ausgebildete Bohrung eingepresst. Hierfür besitzt die Verliersicherung einen zylindrischen Hülsenteil, der derart geringfügig größer ausgebildet ist als der Durchmesser der Bohrung, dass der Hülsentell unter Spannung in die Bohrung einpressbar ist. Die Verliersicherung besitzt im Hülsentell ein In Richtung zur Rotationsachse nach innen weisendes Sperrglied, um das in den Hülsentell einführbare Verbindungselement festzuhalten. Das Sperrglied ist ein aus dem metallischen Hülsentell ausgeklinkter Bereich, der zungenförmig nach Innen weist. Ist das Verbindungselement als Schraubenelement ausgeführt, kann das freie Ende des Sperrgliedes im Gewinde des Schraubenelementes einhaken, und die Schraube kann gegen die Fügerichtung nicht aus der Bohrung bewegt werden.

Aus der DE 102 61 546 A1 ist eine Sicherungsanordnung mit einem Sicherungsmittel bekannt, das als hülsenförmige Verliersicherung ausgeführt ist. Die hülsenförmige Verliersicherung besitzt mehrere Sperrzungen, welche axial versetzt zueinander angeordnet sind und formschlüssig in das Verbindungselement eingreifen. Die hülsenförmige Verliersicherung wird in die Bohrung im ersten Bauteil eingepresst, um das Verbindungselement in diesem zu halten, sobald dieses in die Bohrung eingesetzt wird.

Weiterhin ist aus der FR 2 880 929 A1 ein Sicherungsmittel bekannt, welches eine Auflagefläche und eine erste Bohrung aufweist. Ferner ist ein Verbindungselement gezeigt, welches aus einem Kopfabschnitt und einem Schaftabschnitt besteht, wobei der Kopfabschnitt zur Anlage an die Auflagefläche vorgesehen ist und zu Beginn der Verschraubung wenigstens teilweise vom Sicherungsmittel formschlüssig gehalten wird.

Aus der DE 295 05 255 U1 ist ferner ein verliersicheres Verbindungselement bekannt, welches zwei Bauteile miteinander verbinden kann. Das Verbindungselement weist einen Kopfabschnitt und einen Schaftabschnitt auf, wobei der Kopfabschnitt in einer ersten Position verliersicher in einem Abstand zu einer Auflagefläche durch ein Sicherungsmittel gehalten werden kann. In einer zweiten Position hingegen liegt der Kopfabschnitt auf der Auflagefläche auf und der Schaftabschnitt des Verbindungselements wirkt weiterhin über ein entsprechendes Drehmoment mit dem Sicherungsmittel beim Festschrauben zusammen.

Bei den bekannten Sicherungsanordnungen entsteht der Nachteil, dass unabhängig von der axialen Position des Verbindungselementes zu dessen Halterung eine Kraft auf dieses ausgeübt wird. Häufig werden Sicherungsanordnungen vorgesehen, um Verbindungsmittel an einem Bauteil anzuordnen, um das Bauteil in einen vorkonfektionierten Zustand mit dem Verbindungselement zu transportieren. Ist das Verbindungselement als Schraubenelement ausgebildet, wird dieses häufig mit einem kontrolliertem Drehmoment verschraubt, um das erste Bauteil beispielsweise mit einem zweiten Bauteil zu verbinden. Bei der Verschraubung des ersten Bauteils mit dem zweiten Bauteil durch das Schraubenelement ist eine Verfälschung des geforderten Drehmoments zum Anzug des Schraubenelementes unerwünscht. Sicherungselemente der voranstehend genannten Art welsen jedoch den Nachteil auf, unabhängig von der Einschraubtiefe eine Klemmwirkung des Schmubenelementes im ersten Bauteil zu erzeugen, welches das durch ein Drehmomentschraubsystem messbare Anzugsmoment verfälscht. Im Ergebnis ist ein hinreichend genaues Anzugsmoment zur Verschraubung des Schraubenelementes in einer im zweiten Bauteil vorhandenen Gewindebohrung nicht gewährleistet.

Es ist daher die Aufgabe die vorliegenden Erfindung, eine Sicherungsanordnung zur verliersicheren Aufnahme eines Verbindungselementes durch ein Sicherungsmittel zu schaffen, das die Nachteile des vorgenannten Standes der Technik überwindet und das Verbindungselement in einer Befestigungsposition freigibt.

Diese Aufgabe wird ausgehend von einer Sicherungsanordnung zur verliersicheren Aufnahme eines Verbindungselementes mit einem Sicherungsmittel gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Sicherungsmittel den Kopfabschnitt des Verbindungselementes wenigstens teilweise umschließt und dass der Kopfabschnitt durch das Sicherungsmittel aufnehmbar ist, derart, dass der Kopfabschnitt in einer ersten Position in einem Abstand zur Auflagefläche gehalten ist und in einer zweiten Position aufliegend auf der Auflagefläche gelöst ist, um in der zweiten Position ein momentfreies Drehen des Verbindungselementes um die Rotationsachse zu ermöglichen.

Die Erfindung geht von dem Gedanken aus, dass das Sicherungsmittel der Sicherungsanordnung das Verbindungselement nicht über den Schaftabschnitt sichert, sondern über den Kopfabschnitt. Wird das Verbindungselement in die Bohrung im ersten Bauteil eingeführt, so durchwandert der Kopfabschnitt sowohl die erste Position als auch die zweite Position. In der ersten Position befindet sich der Kopfabschnitt etwa auf der Höhe des Sicherungsmittels, um durch dieses geklemmt zu werden. In dieser Position ist eine sichere Anordnung des Verbindungsmittels am ersten Bauteil gewährleistet, so dass das erste und/oder das zweite Bauteil transportiert werden kann. Erfolgt anschließend eine drehmomentkontrollierte Verschraubung des Verbindungselementes, so wird der Kopfabschnitt weiter in Richtung zur Auflagefläche am ersten Bauteil bewegt. Dabei verlässt der Kopfabschnitt die erste Position und wird in die zweite Position überführt, in der der Kopfabschnitt auf der Auflagefläche aufliegt. In dieser zweiten Position hat sich der Kopfabschnitt aus der Klemmung durch das Sicherungsmittel gelöst, so dass das Verbindungselement insgesamt drehmomentfrei um die Rotationsachse gedreht werden kann. Folglich ist ein unverfälschtes und drehmomentkontrolliertes Verschrauben des Verbindungselementes möglich.

Gemäß einer vorteilhaften Ausführungsform der Sicherungsanordnung ist das Sicherungsmittel mit dem ersten Bauteil einteilig ausgeführt. Dabei kann das Sicherungsmittel gegenständlich am ersten Bauteil angeformt sein, wobei die Anformung vorzugsweise im an die Auflagefläche des ersten Bauteils angrenzenden Bereich vorgesehen ist. Alternativ kann das Sicherungsmittel als separates Element ausgeführt werden, das an das erste Bauteil angefügt wird.

Vorteilhafterweise ist wenigstens das erste Bauteil mittels eines Spritz- und/oder Druckgussverfahrens hergestellt, wobei die Herstellung des Sicherungsmittels durch die Herstellung des ersten Bauteils erfolgt. Das Druckgussverfahren umfasst dabei insgesamt einen Hauptverfahrenschritt, in dem sowohl die Formgebung des ersten Bauteils als auch des Sicherungsmittels erfolgt. Bei Anwendung dieses Verfahrens ist das Sicherungsmittel im Ergebnis einteilig mit dem ersten Bauteil ausgeführt.

Ferner ist es von Vorteil, dass das erste Bauteil und das zweite Bauteil einstückig ausgeführt sind, um gemeinsam eine Befestigungseinrichtung mit einer C-förmigen Struktur zu schaffen, wobei ferner das Verbindungselement als Schraubenelement ausgebildet ist und wobei das erste Bauteil und/oder das zweite Bauteil aus einem Zinkdruckguss-Material (Zamak), einem Magnesiummaterial, einem Aluminiummaterial, einer Leichtmetalllegierung und/oder einem Kunststoffmaterial ausgebildet sind. Die Befestigungseinrichtung kann Bestandteil einer mechanischen und elektrischen Lenkradverriegelung (ELV) für ein Kraftfahrzeug sein, wobei die C-förmige Struktur der Befestigungseinrichtung die Lenksäule des Kraftfahrzeugs umschließt. Die Befestigung der elektrischen Lenkradverriegelung an der Lenksäule des Kraftfahrzeugs erfolgt durch eine Klemmung, die dadurch erreicht wird, dass das Verbindungselement in Gestalt eines Schraubenelementes ausgeführt ist, und dass die Verschraubung an der Öffnungsseite der C-förmigen Struktur angeordnet ist. Wird das Schraubenelement festgezogen, so verringert sich geringfügig der Innendurchmesser der C-förmigen Struktur, und die Klemmung ist zwischen der Lenksäule und der Befestigungseinrichtung sichergestellt. Aufgrund der komplexen Struktur der Befestigungseinrichtung für eine mechanische und elektrische Lenkradverriegelung (ELV) bietet sich ein Druckgussverfahren oder ein Spritzgussverfahren zu dessen Herstellung an. Druckguss- oder spritzgussfähige Werkstoffe sind beispielsweise Zinkdruckguss-Legierungen, Leichtmetalllegierungen, Magnesiummaterialien, Aluminiummaterialien oder Kunststoffmaterialien, wobei jeder weitere Werkstoff, beispielsweise ein Stahlwerkstoff, eine mögliche Alternative zur grundsätzlichen Herstellung bietet. Die zuvor genannten Werkstoffe können selbstverständlich auch bei einer baulichen Trennung des ersten Bauteils von dem zweiten Bauteil vorgesehen sein, d.h. die beiden Bauteilen sind nicht einstückig ausgestaltet.

Insbesondere ist das Sicherungsmittel bei Ausgestaltung der Befestigungseinrichtung aus einem Stahlwerkstoff durch Biege- und Stanzverfahren herstellbar, so dass beispielsweise ein zungenförmiges Federelement den Kopfabschnitt des Schraubenelementes in der ersten Position mit einem Abstand zur Auflagefläche halten kann.

Es ist ferner von Vorteil, dass die Bohrung im ersten Bauteil eine Durchgangsbohrung ist, wobei das zweite Bauteil eine Gewindebohrung aufweist, so dass der Schaftabschnitt des Schraubenelementes durch die Durchgangsbohrung hindurchführbar und in die Gewindebohrung einschraubbar ist. Befindet sich der Kopfabschnitt des Schraubenelementes in der ersten Position in einem Abstand zur Auflagefläche, kann der Schaftabschnitt des Schraubenelementes bereits in die Gewindebohrung im zweiten Bauteil eingeschraubt sein. Hierdurch entsteht zwar eine Aufnahme des Schraubenelementes im ersten bzw. zweiten Bauteil, jedoch bewirkt diese keine verliersichere Anordnung. Insbesondere beim Transport, bei dem Vibrationen auftreten, kann ein lediglich in eine Gewindebohrung eingeschraubter Schaftabschnitt eines Schraubenelementes ein Verlust der Anordnung des Schraubenelementes in der Gewindebohrung hervorrufen. Durch die Einwirkung des Sicherungsmittels auf den Kopfabschnitt des Schraubenelementes entsteht eine Verklemmung des Schaftabschnitts in der Gewindebohrung, wobei der Kopfabschnitt vorzugsweise direkt geklemmt wird, so dass eine Verliersicherung des Schraubenelementes sichergestellt ist. Alternativ kann sich der Schaftabschnitt lediglich durch die Durchgangsbohrung im ersten Bauteil hindurch erstrecken, wodurch ebenfalls eine Klemmung durch das Sicherungsmittel erzeugbar ist.

Das erste Bauteil besitzt einen Stützbereich, der zumindest teilweise um die Rotationsachse herum verläuft, wobei das Sicherungsmittel als kragenförmiger Ansatz ausgebildet ist, der sich in Erstreckungsrichtung der Rotationsachse an den Stützbereich anschließt. Der Stützbereich am ersten Bauteil bildet eine laschenförmige Anformung, durch die sich die Durchgangsbohrung entlang der Rotationsachse hindurch erstreckt. Um die Durchgangsbohrung herum ist der Stützbereich durch eine massive Materialleibung gebildet, um große Verschraubungskräfte in das erste Bauteil einzuleiten.

Die Materialleibung bildet einen kraftaufnehmenden Stützbereich, wobei auf der Oberseite des Stützbereiches die Auflagefläche zur Auflage des Kopfabschnitts des Schraubenelementes ausgebildet ist, und wobei die Auflagefläche eine Plananlagefläche bildet. Im Anschluss an die Plananlagefläche erstreckt sich der kragenförmige Ansatz zur Bildung des Sicherungsmittels in Richtung zur Rotationsachse nach oben, um über die Auflagefläche hinaus zu ragen. Der Stützbereich kann zur Bildung der Materialleibung einen äußeren Gurtabschnitt und einen inneren Gurtabschnitt bilden, wobei der kragenförmige Ansatz vorzugsweise oberseitig auf dem inneren Gurtabschnitt ausgebildet ist. Zwischen den Gurtabschnitten können sich Materialstege erstrecken, die radial in Richtung auf die Rotationsachse zulaufen.

Der Kopfabschnitt kann mit einem Abschnitt von etwa 180° durch den kragenförmigen Ansatz umschlossen sein, wobei auch eine geringere oder größere bis vollständige Umschließung möglich ist. Der kragenförmige Ansatz kann einen Durchmesser besitzen, der derart ausgebildet ist, dass der Kopfabschnitt des Verbindungselementes im kragenförmigen Ansatz klemmbar ist. Insbesondere kann der Durchmesser geringfügig kleiner sein als der Durchmesser des Kopfabschnitts des Verbindungselementes, so dass eine formschlüssige Klemmung des Kopfabschnitts möglich wird. Befindet sich der Kopfabschnitt in der ersten Position, so umschließt der kragenförmige Ansatz den Kopfabschnitt auf einem Abschnitt von etwa 180°, wobei der Durchmesser des kragenförmigen Ansatzes in Richtung zur Auflagefläche wiederum leicht zunehmen kann, um den Kopfabschnitt des Verbindungselementes freizugeben. Nur dann kann eine momentfreie Drehung des Verbindungselementes in der zweiten Position sichergestellt werden. Sofern das erste Bauteil mit dem Sicherungsmittel durch ein Spritzguss- oder Druckgussverfahren hergestellt wird, ist eine auf die Teilungsebene eines Spritzgusswerkzeugs orthogonale Schließbewegung des Gusswerkzeugs wünschenswert. Folglich ist ein Hinterschnitt im kragenförmigen Ansatz nachteilhaft. Daher kann der geringfügig geringere Durchmesser des kragenförmigen Ansatzes in der ersten Position gegenüber dem Durchmesser in der zweiten Position durch eine nachträgliche plastische Verformung des kragenförmigen Ansatzes in Richtung zur Rotationsachse vorgenommen werden.

Alternativ besteht die Möglichkeit, dass die Klemmung des Kopfabschnitts durch ein Verkörnen und/oder durch ein Verstemmen des kragenförmigen Ansatzes mit dem Kopfabschnitt ausgeführt wird. Die verliersichere Anordnung des Verbindungselementes erfolgt daher zunächst durch ein Einsetzen des Verbindungselementes in die Bohrung im ersten Bauteil, bis der Kopfabschnitt des Verbindungselementes auf der Höhe des kragenförmigen Ansatzes angeordnet ist. Anschließend erfolgt das Verkörnen oder das Verstemmen des kragenförmigen Ansatzes gegen den Kopfabschnitt in radialer Richtung, um diesen zu halten.

Die vorliegende Erfindung richtet sich ferner auf ein Verfahren zur verliersicheren Aufnahme eines um eine Rotationsachse ausgeführten bolzenförmigen Verbindungselementes an einem ersten Bauteil, wobei das Verbindungselement einen Kopfabschnitt und einen Schaftabschnitt aufweist, wobei im ersten Bauteil eine Bohrung vorgesehen ist und an diesem ferner ein Sicherungsmittel angeordnet wird, wobei das Verfahren zunächst den Schritt des Anordnens des Sicherungsmittels am ersten Bauteil aufweist, das zur wenigstens teilweisen Umschließung des Kopfabschnitts ausgebildet ist. Ferner umfasst das Verfahren das Einführen des Schaftabschnitts des Verbindungselements in die Bohrung aus Richtung der Rotationsachse, bis sich der Kopfabschnitt des Verbindungselements auf der Höhe des Sicherungsmittels befindet, und es erfolgt ein Klemmen des Kopfabschnitts durch das Sicherungsmittel.

Vorteilhafterweise wird das Anordnen des Sicherungsmittels an das erste Bauteil mittels eines Spritzgussverfahrens und/oder mittels eines Druckgussverfahrens vorgenommen, indem das Sicherungsmittel mit dem ersten Bauteil in einem Spritzgussschritt ausgebildet wird, so dass das Sicherungsmittel mit dem ersten Bauteil materialeinheitlich entsteht. Das Verbindungselement wird mit dem Schaftabschnitt in die Bohrung im ersten Bauteil eingeführt, wobei der Schaftabschnitt ferner in die Gewindebohrung im zweiten Bauteil eingeschraubt werden kann. Das Einführen des Schaftabschnitts des Verbindungselements erfolgt so tief, bis der Kopfabschnitt auf der Höhe des Sicherungsmittels liegt, wodurch die erste Position erreicht wird. Zum Einführen des bolzenförmigen Verbindungselementes in die am ersten Bauteil vorhandene Bohrung kann eine Fügekraft aufgewendet werden, um den Kopfabschnitt im Sicherungsmittel zu klemmen. Die Fügekraft kann sich auch in einem notwendigen Drehmoment äußern, wenn der Schaftabschnitt in die Durchgangsbohrung im zweiten Bauteil eingeschraubt wird. Die Durchgangsbohrung im zweiten Bauteil kann dabei auch als Sacklochbohrung mit Innengewinde ausgebildet werden.

Alternativ kann das Sicherungsmittel durch ein Angussverfahren an das erste Bauteil angegossen werden, wobei das Sicherungsmittel mit dem ersten Bauteil materialeinheitlich oder materialunterschiedlich ausgeführt werden kann.

Zur Herstellung der Klemmung des Kopfabschnitts im Sicherungsmittel kann ein Verkörnen oder ein Verstemmen des kragenförmigen Ansatzes gegen den Kopfabschnitt vorgenommen werden, wenn der Kopfabschnitt an das Sicherungsmittel angrenzt. Wird beispielsweise nach einem Transport das Verbindungselement von der ersten Position in die zweite Position überführt, wird dieses tiefer in die Gewindebohrung im zweiten Bauteil eingeschraubt. Dabei löst sich der Kopfabschnitt aus dem kragenförmigen Ansatz und ist drehmomentfrei drehbar. Erst wenn der Kopfabschnitt auf der Auflagefläche aufliegt, kann ein Anzugsmoment aufgewendet werden, was zur Schraubenvorspannung führt. Das Anzugsmoment ist dabei durch das Sicherungsmittel unverfälscht, da dieses in der zweiten Position nicht auf den Kopfabschnitt des Verbindungselementes einwirkt.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel der erfindungsgemäßen Sicherungsanordnung mit einem Verbindungselement, wobei sich der Kopfabschnitt des Verbindungselementes oberhalb des Sicherungsabschnittes befindet,
- Figur 2: das Ausführungsbeispiel der Sicherungsanordnung gemäß der Figur 1, wobei das Verbindungselement weiter in die Gewindebohrung im zweiten Bauteil eingeschraubt ist und sich der Kopfabschnitt auf der Höhe des Sicherungsmittels befindet und somit die erste Position erreicht ist,
- Figur 3: das Ausführungsbeispiel der Sicherungsanordnung gemäß der Figuren 1 oder 2, wobei das Verbindungselement in vollständig eingeschraubter Position dargestellt ist, so dass der Kopfabschnitt in der zweiten Position angeordnet ist und das Sicherungsmittel den Kopfabschnitt wieder freigibt,
- Figur 4: eine perspektivische Ansicht des Ausführungsbeispiels der erfindungsgemäßen Sicherungsanordnung mit einem Schnitt durch das erste und zweite Bauteil und
- Figur 5: eine perspektivische Ansicht des Ausführungsbeispiels der Sicherungsanordnung mit einem Verbindungselement zwischen dem ersten und dem zweiten Bauteil.

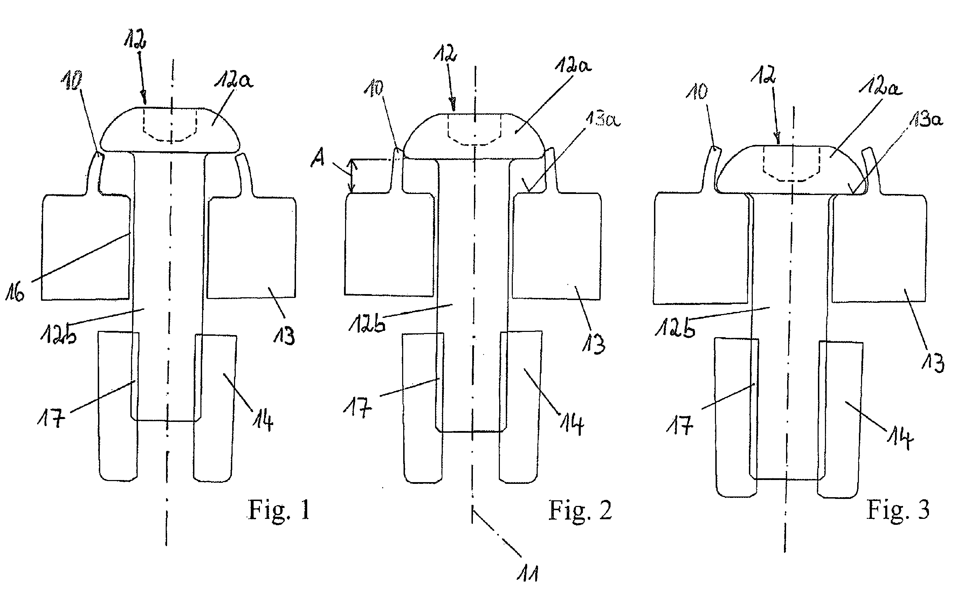

In Figur 1 ist ein Ausführungsbeispiel einer Sicherungsanordnung gemäß der vorliegenden Erfindung schematisch dargestellt. Die Sicherungsanordnung dient zur Sicherung eines bolzenförmigen Verbindungselementes 12 in einem ersten Bauteil 13, das mit einem zweiten Bauteil 14 verbunden wird. Das bolzenförmige Verbindungselement 12 ist als Schraubenelement 12 ausgeführt und besitzt einen Kopfabschnitt 12a und einen Schaftabschnitt 12b. Das erste Bauteil 13 weist eine Bohrung 16 auf, die als Durchgangsbohrung ausgebildet ist, wohingegen das zweite Bauteil14 eine Gewindebohrung 17 besitzt, in die der Schaftabschnitt 12b des bolzenförmigen Verbindungselementes 12 eingeschraubt werden kann. Am ersten Bauteil 13 ist ein Sicherungsmittel 10 angeformt, das zur Klemmung des Kopfabschnitts 12a dient. Das Verbindungselement 12 ist über den Schaftabschnitt 12b nur so tief in die Gewindebohrung 17 eingeschraubt, dass der Kopfabschnitt 12a über dem Sicherungsmittel 10 positioniert ist und eine Sicherungsfunktion noch nicht erfüllt wird.

In Figur 2 ist die Sicherungsanordnung zur verliersicheren Aufnahme des Verbindungselementes 12 dargestellt, wobei das Verbindungselement 12 über den Schaftabschnitt 12b bereits in einer Tiefe in die Gewindebohrung 17 im zweiten Bauteil 14 eingeschraubt ist, dass sich der Kopfabschnitt 12a in der ersten Position befindet und durch das Sicherungsmittel 10 geklemmt wird. Dabei besitzt der Kopfabschnitt 12a einen Abstand A zu einer Auflagefläche 13a, die als Planfläche oberseitig auf dem ersten Bauteil 13 ausgebildet ist. Das Sicherungsmittel 10 ist als kragenförmiger Ansatz auf dem ersten Bauteil 13 ausgeführt, und besitzt eine in Richtung zur Rotationsachse 11 hin ausgeführte Krümmung. Dadurch kann der Kopfabschnitt 12a dann am ersten Bauteil 13 bzw. am zweiten Bauteil 14 gehalten werden, wenn der Kopfabschnitt 12a den Abstand A besitzt. Aufgrund der nach innen ausgeführten Krümmung des Sicherungsmittels 10 ist erkennbar, dass dann, wenn das Verbindungselement 12 über den Schaftabschnitt 12b tiefer in die Gewindebohrung 17 im zweiten Bauteil 14 eingeschraubt wird, innerhalb des kragenförmigen Ansatzes 10 frei drehbar ist, was in Figur 3 dargestellt ist.

Figur 3 zeigt eine Position des Verbindungselementes 12 im ersten Bauteil 13 bzw. im zweiten Bauteil 14, die der zweiten Position entspricht. Der Schaftabschnitt 12b des Verbindungselementes 12 ist so tief in die Gewindebohrung 17 eingeschraubt, dass der Kopfabschnitt 12a an die Auflagefläche 13a des ersten Bauteils 13 angrenzt. In dieser Position kann das Verbindungselement 12 zur Verschraubung des ersten Bauteils 13 mit dem zweiten Bauteil 14 dienen, wobei das Verbindungselement 12 mit dem Schaftabschnitt 12b mit einem Drehmoment in die Gewindebohrung 17 eingeschraubt werden kann, das nicht durch eine Klemmung durch das Sicherungselementes 10 verfälscht wird, da sich der Kopfabschnitt 12a über dem ersten Bauteil 13 frei drehen kann.

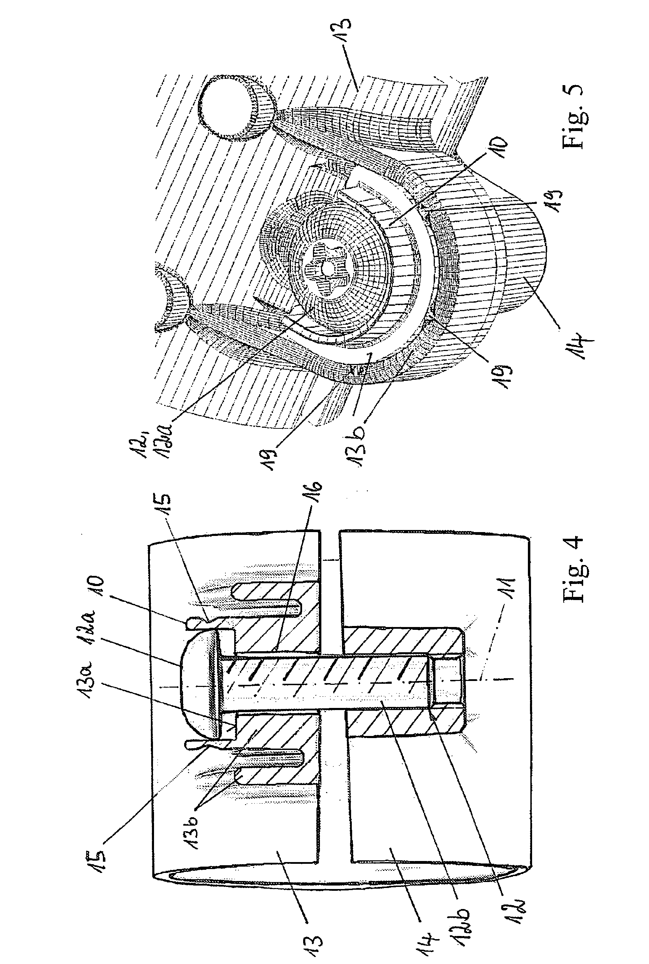

Figur 4 zeigt eine Seitenansicht des ersten Bauteils 13 und des zweiten Bauteils 14 in einer geschnittenen Darstellung, so dass das Verbindungselement 12 in der Anordnung der ersten Position sichtbar ist. Die Darstellung zeigt, dass das erste Bauteil 13 mit dem zweiten Bauteil 14 einteilig ausgeführt ist, wobei die Bauteile 13 und 14 eine Befestigungseinrichtung mit einer C-förmigen Struktur bilden, die Bestandteil einer insbesondere mechanischen und/oder elektrischen Lenkradverriegelung (ELV) ist oder zumindest die Befestigung einer Lenkradverriegelung für ein Kraftfahrzeug an einer Lenksäule bildet. Das erste Bauteil 13 besitzt einen Stützbereich 13b, der eine Materialleibung um die Durchgangsbohrung 16 im ersten Bauteil 13 bildet. Der Stützbereich 13b ist geschnitten gezeigt und besitzt einen inneren und einen äußeren Bereich, durch die die Kräfte in das erste Bauteil 13 übertragen werden, die durch das Verbindungselement 12 über die Auflagefläche 13a auf der Oberseite des Stützbereiches 13b des ersten Bauteils 13 eingeleitet werden.

Gemäß der Darstellung ist ein Sicherungsmittel 10 vorgesehen, das als kragenförmiger Ansatz auf der Oberseite des Stützbereichs 13b angeformt ist. Der Schraubenkopf 12a ist mit dem Abstand A über der Auflagefläche 13 dargestellt, und befindet sich somit in der ersten Position, die die Klemmposition bildet. Der kragenförmige Ansatz 10 besitzt Verkörnungsbereiche 15, in denen das Material des kragenförmigen Ansatzes 10 in Richtung zum Kopfabschnitt 12a des Verbindungselementes 12 plastisch verformt ist. Die Verkörnungsbereiche 15 können durch ein Werkzeug erzeugt werden, indem das Material des kragenförmigen Ansatzes in Richtung zur Rotationsachse 11, beispielsweise mit einem spitzen Gegenstand, angeschlagen wird. Dies kann entweder vor dem Einfügen des Schraubenelements 12 erfolgen, wobei die Verkörnung auch erst mit eingesetztem Verbindungselement 12 vorgenommen werden kann.

Figur 5 zeigt eine perspektivische Ansicht der Sicherungsanordnung mit einem Sicherungsmittel 10 zur verliersicheren Aufnahme eines Verbindungselementes 12, das wiederum als Schraubenelement 12 ausgeführt ist. In der perspektivischen Ansicht ist erkennbar, dass die Stützbereiche 13b das Schraubenelement 12 auf einem Winkel von etwa 180° umschließen. Auf dem Inneren Stützbereich 13b ist ein kragenförmiger Ansatz 10 ausgebildet, der das Sicherungsmittel 10 zur Sicherung des Verbindungselementes 12 bildet. Zwischen dem äußeren und dem Inneren Stützbereich 13b sind festigkeitsstelgemde Materialstege 19 ausgebildet. Die Stützbereiche 13b umschließen den Kopfabschnitt 12a des Verbindungselementes 12 auf einem Winkel von etwa 180°, wobei der äußere Stützbereich 13b eine gurtartige Verbindung zum Grundkörper des ersten Bauteils 13 besitzt, um eine Überleitung der Schraubenkraft in das erste Bauteil 13 zu schaffen.

Die Erfindung beschränkt sich In Ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere kann das Verbindungselement auch als Bejonettschlleßelement oder als sonstiges Schließelement ausgebildet sein und ist nicht auf die Ausführung als Schraube begrenzt. Das erste Bauteil und das zweite Bauteil können beliebige Funktionen erfüllen und Ausgestaltungen aufweisen, und können entweder jeweils oder gemeinsam ein Einzelteil bilden. Die Anordnung des Sicherungsmittels am ersten Bauteil kann direkt bei der Herstellung des Bauteils - beispielsweise im Spritz- oder Druckgussverfahren- erfolgen, wobei das Sicherungsmittel auch separat mit dem ersten Bauteil durch ein Fügeverfahren verbunden werden kann.

### Bezugszeichenliste

- 10: Sicherungsmittel
- 11: Rotationsachse
- 12: bolzenförmiges Verbindungselement, Schraubenelement
- 12a: Kopfabschnitt, Schraubenkopf
- 12b: Schaftabschnitt
- 13: erster Bauteil
- 13a: Auflagefläche
- 13b: Stützbereich
- 14: zweiter Bauteil
- 15: Verkörnungsbereich
- 16: Bohrung, Durchgangsbohrung
- 17: Gewindebohrung
- 18: Durchmesser
- 19: Materialssteg

- A: Abstand

## Patentansprüche

1. Sicherungsanordnung mit einem Sicherungsmittel (10) zur verliersicheren Aufnahme eines um eine Rotationsachse (11) ausgeführten bolzenförmigen Verbindungselementes (12) an einem ersten Bauteil (13),
wobei das Verbindungselement (12) zur Verbindung des ersten Bauteils (13) mit wenigstens einem zweiten Bauteil (14) vorgesehen ist,
und wobei das Verbindungselement (12) einen Kopfabschnitt (12a) und einen Schaftabschnitt (12b) aufweist,
sodass der Schaftabschnitt (12b) in eine um die Rotationsachse (11) herum ausgebildete Bohrung (16) im ersten Bauteil (13) einfügbar ist und
wobei der Kopfabschnitt (12a) zur Anlage an einer Auflagefläche (13a) des ersten Bauteils (13) ausgebildet ist, und das Sicherungsmittel (10) den Kopfabschnitt (12a) wenigstens teilweise umschließt,
**dadurch gekennzeichnet, dass**
der Kopfabschnitt (12a) durch das Sicherungsmittel (10) aufnehmbar ist, derart,
dass der Kopfabschnitt (12a) in einer ersten Position in einem Abstand (A) zur Auflagefläche (13a) verliersicher, mittels Klemmung, gehalten ist und
in einer zweiten Position aufliegend auf der Auflagefläche vom Sicherungsmittel (10) gelöst ist, um in der zweiten Position ein momentfreies Drehen des Verbindungselementes (12) um die Rotationsachse (11) zu ermöglichen.

2. Sicherungsamordnung nach Anspruch 1,
**dadurch gekennzeichnet, dass** das Sicherungsmittel (10) mit dem ersten Bauteil (13) einteilig ausgeführt ist.

3. Sicherungsanordnung nach Anspruch 1 oder 2,
**dadurch gekennzeichnet, dass** wenigstens das erste Bauteil (13) mittels eines Spritz- und/oder Druckgussvarfahrens hergestellt ist, wobei die Herstellung des Sicherungsmittels (10) durch die Herstellung des ersten Bauteils (13) erfolgt.

4. Sicherungsanordnung nach einem der Ansprüche 1 bis 3,
**dadurch gekennzeichnet, dass** das erste Bauteil (13) und das zweite Bauteil (14) einstückig ausgeführt sind, die gemeinsam eine Befestigungseinrichtung mit einer C-förmigen Struktur bilden, wobei das Verbindungselement (12) als Schraubenelement (12) ausgebildet ist und wobei insbesondere das erste Bauteil (13) und das zweite Bauteil (14) aus einem Zinkdruckguss-Material, einer Leichtmetalliegierung, einem Magnesiummaterial, einem Aluminiummaterial und/oder einem Kunststoffmaterial ausgebildet sind.

5. Sicherungsanordnung nach Anspruch 4,
**dadurch gekennzeichnet, dass** die Bohrung (16) im ersten Bauteil (13) eine Durchgangsbohrung (16) ist, wobei das zweite Bauteil (14) eine Gewindebohrung (17) aufweist, sodass der Schaftabschnitt (12b) des Schraubenelementes (12) durch die Durchgangsbohrung (16) hindurch führbar ist und in die Gewindebohrung (17) einschraubbar ist.

6. Sicherungsanordnung nach einem der vorgenannten Ansprüche,
**dadurch gekennzeichnet, dass** das erste Bauteil (13) einen Stützbereich (13b) aufweist, der zumindest teilweise um die Rotationsachse (11) herum verläuft, wobei das Sicherungsmittel (10) als kragenförmiger Ansatz (10) ausgebildet ist, der sich in Erstreckungsrichtung der Rotationsachse (11) an den Stützbereich (13b) anschließt.

7. Sicherungsanordnung nach Anspruch 6,
**dadurch gekennzeichnet, dass** die Auflagefläche (13a) oberseitig auf dem Stützbereich (13b) ausgebildet ist, um für den Kopfabschnitt (12a) eine ringförmig um die Rotationsachse (11) herum ausgebildete Plananlagefläche zu bilden.

8. Sicherungsanordnung nach einem der Ansprüche 6 oder 7,
**dadurch gekennzeichnet, dass** der Kopfabschnitt (12a) mit einem Abschnitt von etwa 180° durch den kragenförmigen Ansatz (10) umschlossen ist.

9. Sicherungsanordnung nach einem der Ansprüche 6 bis 8,
dadurch gekennzeichet, dass der kragenförmige Ansatz (10) einen Durchmesser (18) aufweist, der derart ausgebildet ist, dass der Kopfabschnitt (12a) des Verbindungselementes (12) im kragenförmigen Ansatz (10) klemmbar ist.

10. Sicherungsanordnung nach einem der Ansprüche 6 bis 8,
**dadurch gekennzeichnet, dass** die Klemmung des Kopfabschnittes (12a) durch ein Verkömen und/oder ein Verstemmen des kragenförmigen Ansalzes (10) mit dem Kopfabschnitt (12) ausgeführt ist.

11. Verfahren zur verliersicheren Aufnahme eines um eine Rotationsachse (11) ausgeführten bolzenförmigen Verbindungselementes (12) an einem ersten Bauteil (13),
wobei das Verbindungselement (12) einen Kopfabschnitt (12a) und einen Schaftabschnitt (12b) aufweist,
wobei im ersten Bauteil (13) eine Bohrung (16) vorgesehen ist und
ein Sicherungsmittel (10) im ersten Bauteil (13) aufweist,
und wobei das Verfahren wenigstens die folgenden Schritte aufweiset:
- Anordnen des Sicherungsmittels (10) am ersten Bauteil (13), das zur wenigstens tellweisen Umschließung des Kopfabschnittes (12a) ausgebildet ist,
- Einführen das Schaftabschnittes (12b) des Verbindungselementes (12) in die Bohrung (16) aus Richtung der Rotationsachse (11), bis sich der Kopfabschnitt (12a) des Verbindungselementes (12) auf der Höhe des Sicherungsmittels (10) befindet und
- die verliersichere Halterung des Kopfabschnittes (12a) durch das Sicherungsmittel (10) mittels einer Klemmung.

12. Verfahren nach Anspruch 11,
**dadurch gekennzeichnet, dass** das Anordnen des Sicherungsmittels (10) an das erste Bauteil (13) mittels eines Spritzgussverfahrens vorgenommen wird, indem das Sicherungsmittel (10) mit dem ersten Bauteil (13) in einem Spritzgussschritt ausgebildet wird, sodass das Sicherungsmittel (10) mit dem ersten Bauteil (13) materialeinheltlich ausgeführt wird.

13. Verfahren nach Anspruch 11,
**dadurch gekennzeichnet, dass** das Sicherungsmittel (10) durch ein Angussverfahren an das erste Bauteil (13) angegossen wird, wobei das Sieherungsmittel (10) mit dem ersten Bauteil (13) materialeinheitlich oder materialunterschiedlich ausgeführt wird.

14. Verfahren nach Anspruch 11 bis 13,
**dadurch gekennzeichnet, dass** zum Einführen des bolzenförmigen Verbindungselementes (12) wenigstens in die am ersten Bauteil (13) vorhandene Bohrung (16) eine Fügekraft angewendet wird.

15. Verfahren nach Anspruch 11 bis 14,
**dadurch gekennzeichnet, dass** die verliersichere Halterung des Kopfabschnittes (12a) im Sicherungsmittel (10) durch ein Verkömen und/oder ein Verstemmen des kragenförmigen Ansatzes (10) mit dem Kopfabschnitt (12) vorgenommen wird, wenn der Kopfabschnitt (12a) an das Sicherungsmilttel (10) angrenzt.

## Claims

1. Safety arrangement with a safety means (10) for the lose-proof acceptance of a bolt-like connecting element (12), which is accomplished around an axis of rotation (11) at a first component (13),
wherein the connecting element (12) is intended to connect the first component (13) with at least a second component (14),
and wherein the connecting element (12) comprises a head section (12a) and a shaft section (12b),
so that the shaft section (12b) can be inserted into a bore (16) in a first component (13), which is accomplished around the axis of rotation (11)
and wherein the head section (12a) is constructed for the fit at a bearing area (13a) of the first component (13) and that the safety means (10) at least partially encloses the head section (12a),
**characterized in that**
the head section (12a) can be accepted by the safety means (10) in a way,
that the head section (12a) is kept in a first position in a distance (A) towards the bearing area (13a) in a lose-proof way via a clamping and
is in a second position detached by bearing on the bearing area of the safety means (10) in order to enable a torque free rotation of the connecting element (12) around the axis of rotation (11).

2. Safety arrangement according to claim 1,
**characterized in that**
the safety means (10) is constructed with a first component (13) in one piece.

3. Safety arrangement according to claim 1 or 2,
**characterized in that**
at least the first component (13) is produced using a casting and/or diecast procedure, wherein the production of the safety means (10) occurs via the production of the first component (13).

4. Safety arrangement according to one of the claims 1 to 3,
**characterized in that**
the first component (13) and the second component (14) are accomplished in one piece, which together build an attachment mechanism with a C-like structure, wherein the connecting element (12) is constructed as a srew element (12) and wherein particularly the first component (13) and a second component (14) are build of a zincdiecasting material, lightmetalalloy, a magnesium material, an aluminum material and/or a plastic material.

5. Safety arrangement according to claim 4,
**characterized in that**
the bore (16) is a throughbore (16) in the first component (13), wherein the second component (14) comprises a tapped bore (17) so that the shaft section (12b) of the screw element (12) can be guided through the throughbore (16) and can be screwed into the tapped bore (17).

6. Safety arrangement according to one of the preceding claims,
**characterized in that**
the first component (13) comprises a supporting area (13b), which at least partially runs around the axis of rotation (11), wherein the safety means (10) is constructed as a collar-like protection (10), which connects to the supporting area (13b) in a the direction of the extension of the axis of rotation (11).

7. Safety arrangement according to claim 6,
**characterized in that**
the bearing area (13a) is constructed on the upper side of the supporting area (13b) in order to form a ring-like planer bearing area for the head section (12a), which is accomplished around the axis of rotation (11).

8. Safety arrangement according to one of the claims 6 or 7,
**characterized in that**
the head section (12a) is enclosed by the collar-like means (10) by an section of about 180°.

9. Safety arrangement according to one of the claims 6 to 8,
**characterized in that**
the collar-like means (10) comprises a diameter (18), which is constructed in a way that the head section (12a) of the connecting element (12) can be clamped in the collar-like means (10).

10. Safety arrangement according to one of the claims 6 to 8,
**characterized in that**
the clamping of the head section (12a) is accomplished by a .... and/or a caulking of the collar-like means (10) with a head section (12).

11. Method for the lose-proof acceptance of a bolt-like connecting element (12) at a first component (13), which is accomplished around an axis of rotation (11),
wherein the connecting element (12) comprises a head section (12a) and a shaft section (12b),
wherein a bore (16) is intended in the first component (13) and
comprises a safety means (10) in the first component (13),
and wherein the method comprises at least one of the following steps:
- Arranging the safety means (10) at the first component (13), which is build for at least partially enclosing the head section (12a),
- Inserting the shaft section (12b) of the connecting element (12) into the bore (16) from the direction of the axis of rotation (11) until the head section (12a) of the connecting element (12) is at the level of the safety means (10) and
- the lose-proof attachment of the head section (12a) trough the safety means (10) via a clamping.

12. Method according to claim 11,
**characterized in that**
the adjustment of the safety means (10) at the first component (13) is done by a casting procedure, by which the safety means (10) is constructed by a casting procedure with a first component (13), so that the safety means (10) is made of the same material as the first component (13).

13. Method according to claim 11,
**characterized in that**
the safety means (10) is casted to the first component (13) via a casting method, wherein the safety means (10) is of the same material or not of the same material as the first component (13).

14. Method according to claims 11 to 13,
**characterized in that**
for the insertion of the bolt-like connecting element (12) a mating force is used at least for the bore (16) at the first component (13).

15. Method according to claims 11 to 14,
**characterized in that**
the lose-proof attachment of the head section (12a) in the safety means (10) is conducted via a .... and/or a caulking of the collar-like means (10) with the head section (12) in case the head section (12a) is adjacent to the safety means (10).

## Revendications

1. Dispositif d'assujettissement doté d'un moyen d'assujettissement (10), pour la réception protégée contre la perte d'un élément de liaison (12) en forme de boulon, réalisé autour d'un axe de rotation (11), sur un premier élément structurel (13),
sachant que l'élément de liaison (12) est prévu pour relier le premier élément structurel (13) à au moins un deuxième élément structurel (14),
et sachant que l'élément de liaison (12) présente une partie de tête (12a) et une partie de corps (12b),
de sorte que la partie de corps (12b) peut être insérée dans le premier élément structurel (13) dans un perçage (16) formé tout autour de l'axe de rotation (11),
et sachant que la partie de tête (12a) est conçue pour s'appliquer contre une surface d'appui (13a) du premier élément structurel (13), et que le moyen d'assujettissement (10) entoure au moins partiellement la partie de tête (12a),
**caractérisé en ce**
**que** la partie de tête (12a) peut être reçue par le moyen d'assujettissement (10) de telle sorte que
dans une première position, la partie de tête (12a) est maintenue par serrage à distance (A) de la surface d'appui (13a), en étant protégée contre la perte,
et dans une deuxième position, la partie de tête (12a) est libérée du moyen d'assujettissement (10) en reposant sur la surface d'appui, afin de permettre dans la deuxième position une rotation sans couple de l'élément de liaison (12) autour de l'axe de rotation (11).

2. Dispositif d'assujettissement selon la revendication 1,
**caractérisé en ce**
**que** le moyen d'assujettissement (10) est réalisé d'un seul tenant avec le premier élément structurel (13).

3. Dispositif d'assujettissement selon la revendication 1 ou 2,
**caractérisé en ce**
**qu'**au moins le premier élément structurel (13) est fabriqué au moyen d'un procédé de moulage par injection et/ou sous pression, sachant que la fabrication du moyen d'assujettissement (10) s'effectue par la fabrication du premier élément structurel (13).

4. Dispositif d'assujettissement selon l'une des revendications 1 à 3,
**caractérisé en ce**
**que** le premier élément structurel (13) et le deuxième élément structurel (14) sont réalisés d'un seul tenant et forment conjointement un dispositif de fixation à structure en forme de C, sachant que l'élément de liaison (12) est réalisé sous forme d'élément fileté (12) et sachant notamment que le premier élément structurel (13) et le deuxième élément structurel (14) sont constitués d'un matériau à base de zinc moulé sous pression, d'un alliage léger, d'un matériau à base de magnésium, d'un matériau à base d'aluminium et/ou d'un matériau à base de matière plastique.

5. Dispositif d'assujettissement selon la revendication 4,
**caractérisé en ce**
**que** le perçage (16) dans le premier élément structurel (13) est un perçage traversant (16), sachant que le deuxième élément structurel (14) présente un perçage fileté (17), de sorte que la partie de corps (12b) de l'élément fileté (12) peut être dirigée à travers le perçage traversant (16) et vissée dans le perçage fileté (17).

6. Dispositif d'assujettissement selon l'une des revendications précédentes, **caractérisé en ce**
**que** le premier élément structurel (13) présente une région de soutien (13b) qui s'étend au moins partiellement tout autour de l'axe de rotation (11), sachant que le moyen d'assujettissement (10) est réalisé sous forme d'appendice en collet (10) qui se raccorde à la région de soutien (13b) dans la direction de développement de l'axe de rotation (11).

7. Dispositif d'assujettissement selon la revendication 6,
**caractérisé en ce**
**que** la surface d'appui (13a) est formée sur le dessus de la région de soutien (13b), afin de former pour la partie de tête (12a) une surface d'application plane formée annulairement tout autour de l'axe de rotation (11).

8. Dispositif d'assujettissement selon l'une des revendications 6 ou 7,
**caractérisé en ce**
**que** la partie de tête (12a) est entourée sur environ 180° par l'appendice en forme de collet (10).

9. Dispositif d'assujettissement selon l'une des revendications 6 à 8,
**caractérisé en ce**
**que** l'appendice en forme de collet (10) présente un diamètre (18) qui est dimensionné de telle sorte que la partie de tête (12a) de l'élément de liaison (12) peut être serrée dans l'appendice en forme de collet (10).

10. Dispositif d'assujettissement selon l'une des revendications 6 à 8,
**caractérisé en ce**
**que** le serrage de la partie de tête (12a) est réalisé par un poinçonnage et/ou un matage de l'appendice en forme de collet (10) avec la partie de tête (12a).

11. Procédé pour la réception protégée contre la perte d'un élément de liaison (12) en forme de boulon, réalisé autour d'un axe de rotation (11), sur un premier élément structurel (13),
sachant que l'élément de liaison (12) présente une partie de tête (12a) et une partie de corps (12b),
sachant qu'un perçage (16) est prévu dans le premier élément structurel (13) et
qu'un moyen d'assujettissement (10) est présent sur le premier élément structurel (13),
et sachant que le procédé comprend au moins les étapes suivantes :
- disposition sur le premier élément structurel (13) du moyen d'assujettissement (10), qui est conçu pour entourer au moins partiellement la partie de tête (12a),
- introduction de la partie de corps (12b) de l'élément de liaison (12) dans le perçage (16) depuis la direction de l'axe de rotation (11), jusqu'à ce que la partie de tête (12a) de l'élément de liaison (12) se trouve à hauteur du moyen d'assujettissement (10), et
- maintien de la partie de tête (12a) de manière protégée contre la perte par le moyen d'assujettissement (10), par serrage.

12. Procédé selon la revendication 11,
**caractérisé en ce**
**que** la disposition du moyen d'assujettissement (10) sur le premier élément structurel (13) est effectuée au moyen d'un procédé de moulage par injection, par le fait que le moyen d'assujettissement (10) est réalisé en une étape de moulage par injection avec le premier élément structurel (13), de sorte que le moyen d'assujettissement (10) est réalisé dans le même matériau que le premier élément structurel (13).

13. Procédé selon la revendication 11,
**caractérisé en ce**
**que** le moyen d'assujettissement (10) est surmoulé sur le premier élément structurel (13) par un procédé d'injection, sachant que le moyen d'assujettissement (10) est réalisé dans le même matériau que le premier élément structurel (13) ou dans un matériau différent.

14. Procédé selon les revendications 11 à 13,
**caractérisé en ce**
**que**, afin d'introduire l'élément de liaison (12) en forme de boulon, on exerce une force d'insertion au moins dans le perçage (16) présent sur le premier élément structurel (13).

15. Procédé selon les revendications 11 à 14,
**caractérisé en ce**
**que** le maintien de manière protégée contre la perte de la partie de tête (12a) dans le moyen d'assujettissement (10) est entrepris par un poinçonnage et/ou un matage de l'appendice en forme de collet (10) avec la partie de tête (12a) lorsque la partie de tête (12a) touche le moyen d'assujettissement (10).
